# EUROPEAN PATENT APPLICATION

(11) **EP 4 521 577 A1**
(43) Date of publication of application: **12.03.2025**
(21) Application number: 23195981.8
(22) Date of filing: 07.09.2023
(51) Int. Cl.: H02J 1/10, H02J 7/00, H02J 7/34

(54) **ENERGY STORAGE SYSTEM**

(71) Applicant: Hitachi Energy Ltd, 8050 Zürich (CH)
(72) Inventor: Viatkin, Aleksandr, 723 38 Västerås (SE); Chou, Shih-Feng, 723 42 Västerås (SE); Bai, Haofeng, 722 12 Västerås (SE); Tayyebi, Ali, 723 59 Västerås (SE); Svensson, Jan, 723 46 Västerås (SE); Khan, Akif Zia, 31-416 Krakow (PL)
(74) Representative: AWA Sweden AB

(57) **Abstract**

An energy storage system is provided comprising at least one energy string. Each energy string comprises a voltage adapter comprising a plurality of distributed sub-voltage adapter units, each having a primary side and a secondary side. Each energy string further comprises a primary energy storage block having at least one energy storage device. The primary sides of the plurality of distributed sub-voltage adapter units and the primary energy storage block are configured to be connected in series. The energy storage system further comprises at least one secondary energy storage block having at least one energy storage device. The secondary side of at least one sub-voltage adapter unit of the plurality of sub-voltage units is configured to be connected with one of said at least one secondary energy storage block.

## Description

### Technical Field

The present disclosure generally relates to the field of energy storage systems (ESSs) in electric power systems. In particular, it relates to an energy storage system (ESS) comprising a voltage adapter arrangement for regulating voltage of a respective part of the energy storage system, as well as a method and a computer program for controlling the energy storage system.

### Background

The energy storage system (ESS) is an arrangement used to store energy. The energy storage system comprises one or more parallel connected energy strings. Each energy string may itself comprise one or more energy storage blocks. Each of the energy storage blocks may comprise series or parallel combinations of low-level energy storage devices, e.g. at rack, module, or cell level.

Different arrangements of the energy storage systems exist at present. Circuits that combine the energy storage with power electronic devices (e.g., voltage source converters, solid-state switches) are found to be prevalent. A prior art US8754543B2 "Battery energy source arrangement and voltage source converter system", depicts an energy storage system that comprises multiple parallel connected energy strings formed of electrochemical batteries. The energy storage system further comprises non-isolated voltage adapters connected in series with respect to energy string. The non-isolated voltage adapters add or subtract a fraction of the voltage of the respective battery string voltage. A drawback with this arrangement is that the capability to balance voltage levels of the energy string is limited, for instance, in case of a large amount of energy being bypassed in one or more energy strings.

The present energy storage system (ESS) structures have limited application either due to high implementation and maintenance costs, large footprint, low efficiency or high design requirements for power electronic devices that are integrated with energy storage systems for energy balancing, protection and maintenance of high energy storage system availability.

### Summary

Thus, it would be advantageous to achieve a method and a device to overcome, or at least alleviate, the above-mentioned drawbacks. In particular, it would be desirable to enable efficient balancing of the energy storage systems. By employing appropriate control and switching pattern for the converters, the voltage imbalance between energy strings, which can originate for different reasons (non-uniform charging/discharging, aging, bypassing of energy storage elements, faults, etc.) can be effectively eliminated. Consequently, this will eliminate circulation currents between the strings, which normally do not contribute to the power delivery but rather cause excessive heating and power loss. In addition to that, power delivered/consumed by the energy string (or by its parts, e.g., rack) can be effectively controlled, preventing excessive charge/discharge of the energy storage elements that compose the string. To better address one or more of these concerns, an energy storage system, a method for charging and discharging an energy storage system, and a computer program product having the features defined in the independent claims are provided. Preferable embodiments are defined in the dependent claims.

Hence, according to a first aspect, an energy storage system is provided comprising at least one energy string. Each energy string comprises a voltage adapter comprising a plurality of distributed sub-voltage adapter units, each having a primary side and a secondary side. Each energy string further comprises a primary energy storage block having at least one energy storage device. The primary sides of the plurality of distributed sub-voltage adapter units and the primary energy storage block are configured to be connected in series. The energy storage system further comprises at least one secondary energy storage block having at least one energy storage device. The secondary side of at least one sub-voltage adapter unit of the plurality of sub-voltage units is configured to be connected with one of said at least one secondary energy storage block.

An advantage associated with the ESS of the present disclosure is that the voltage adapter comprising the plurality of distributed sub-voltage adapter units in each energy string provides a flexible ESS configuration. The voltage adapter comprising the plurality of distributed sub-voltage adapter units is capable of performing multiple functions for the ESS, such as voltage/energy balancing, protection and smooth energizing at different levels (for example, rack level, a module level and a cell level) of the ESS. The proposed energy storage system can also be implemented as a hybrid ESS or a heterogeneous ESS, i.e. the energy string(s) in the ESS may comprise different types of energy storage devices. For instance, the energy storage devices in the at least one energy string may be a combination of batteries, supercapacitors, devices with different chemical compounds (consequently with different charging/discharging characteristics), devices with different state-of-health (e.g., at the beginning or end of their lifecycle) or devices that have substantially different energy and power density (e.g., batteries of energy and power types). A further advantage related to the present disclosure is that the ESS uses a fewer number of voltage adapters, i.e., actively controlled devices, and reduces overall complexity in comparison with available ESS arrangements. This may be achieved by optimizing between the cost, complexity and technical performance. The ESS according to the present disclosure requires fewer number of redundant energy blocks in the primary circuit of the ESS. Since by using the voltage adapters it is possible to fully utilize the primary energy storage blocks, only a few redundant primary energy blocks are needed to support the required availability (deliver or store energy/power) of the ESS system. Furthermore, the present disclosure aims to reduce the cost of the ESS by employing relatively cheap and commercially available sub-voltage adapter units, i.e., the sub-adapter units handling smaller or part of the voltages of the complete voltage of the energy string and are significantly cheaper. The prior art ESS uses more expensive actively controlled devices, i.e., a single voltage adapter which has to handle higher voltage levels and is more expensive and not commercially available. The proposed flexible ESS arrangement incorporating plurality of distributed sub-voltage adapter units in the energy strings provides a trade-off between two extreme cases, i.e. an ESS operation without involving power control electronics, and the available ESS solutions with power control which considerably oversize the energy storage systems.

The primary and secondary energy storage blocks in the energy storage system may comprise different types of energy storage devices or/and different energy capacities.

The energy storage devices in the primary and secondary energy storage blocks may be formed by either the same or different energy storage unit(s), for example, a capacitor(s), battery/batteries, supercapacitor(s), cell(s), module(s), or rack(s). The primary energy storage blocks in the at least one energy string may comprise similar energy storage devices. Similarly, the secondary energy storage blocks in the energy storage system may comprise similar energy storage devices. However, the energy storage devices in the primary energy storage blocks may be different than the energy storage devices in the secondary energy storage blocks. The similarity and difference between the energy storage devices may be defined by the type of the energy storage devices and/or alternatively the energy capacity of the energy storage devices.

Both the primary and secondary energy storage blocks in the energy storage system may comprise several energy storage devices, wherein the primary and secondary energy storage blocks in the energy storage system may comprise different series and/or parallel arrangements of the energy storage devices.

The primary and secondary energy storage blocks in the energy storage system may comprise the energy storage devices on at least one of a rack level, a module level and a cell level.

For example, the at least one energy string in the ESS may comprise one or more series- or/and parallel-connected racks. The number of series-connected and parallel-connected racks can be arbitrary and may depend on the energy storage system design. The rack level may also be called string level. Similarly, each rack may comprise either a single or a plurality of series- or/and parallel-connected modules. The modules themselves may comprise either a single or a plurality of energy storage cells connected in series or/and parallel, depending on the required energy capacity and terminal voltage of the module. Therefore, the basic block of the ESS is the energy storage may be a cell.

The primary energy storage blocks in the ESS may comprise the energy storage devices either at a rack level, a module level or a cell level, may be formed by a similar energy storage unit(s), for example, only a capacitor(s), battery/batteries, a supercapacitor(s), or units with similar charging/discharging rate.

Similarly, the secondary energy storage blocks in the ESS may comprise the energy storage devices either at a rack level, a module level or a cell level, may be formed by a similar energy storage unit(s).

However, the primary energy storage blocks and the secondary energy storage blocks may be formed by different types of energy storage devices. For example, the primary energy storage blocks may comprise the energy storage devices formed by electrochemical batteries, while the secondary energy storage blocks may comprise energy storage devices formed by electrical capacitors. In another example, the energy storage devices forming the primary energy storage blocks and the secondary energy storage blocks are formed by devices with different charging/discharging rate, or devices with different state-of-health of their life cycle.

The present disclosure in particular proposes to utilize the distributed sub-voltage adapter units for protection purposes at rack/string levels of an ESS, which can eventually be used at the system level protection concept by implementing coordinated operation of the sub-voltage adapter units.

The energy storage devices in the energy storage system may be selected from the types batteries, capacitors and super-capacitors. In one example, the energy storage devices forming the primary energy storage blocks are formed by batteries. The energy storage devices forming the secondary energy storage blocks are formed by supercapacitors. However, depending on the functionality of the energy system, other types of energy sources can be considered.

The secondary sides of the sub-voltage adapter units in the energy storage system may be connected with the same secondary energy storage block or different secondary energy storage blocks of said at least one secondary energy storage block.

The energy storage system comprising more than one secondary energy storage blocks may allow the secondary sides of the sub-voltage adapter units in the energy storage system to be connected with different secondary energy storage blocks.

Alternatively, the secondary sides of the sub-voltage adapter units in the energy storage system may be interconnected with the same secondary energy storage block forming a local secondary bus, wherein the sub-voltage adapter units are galvanically isolated.

The energy storage system may further comprise a control unit connected to the voltage adapter to regulate individual voltage levels of the sub-voltage adapter units of the at least one energy string. The control unit may be centralized for the complete energy storage system or distributed for each string in the energy storage system, or may be distributed individually for each of the sub-voltage adapter units of the voltage adapter in the energy storage system. In either way, the control actions of the control unit are coordinated between different sub-voltage adapter units of the voltage adapter.

The energy storage system may further comprise several energy strings. The plurality of distributed sub-voltage adapter units of the voltage adapters of at least two energy strings of the several energy strings are connected to the same secondary energy storage block. The distributed sub-voltage adapter units of the voltage adapters support galvanic isolation between the primary and the secondary sides of the distributed sub-voltage adapter units of the voltage adapters.

Each of the plurality of distributed sub-voltage adapter units of the voltage adapters in the energy storage system may be a DC-DC converter. Each of the DC-DC converters may have an appropriate voltage range depending on the configuration of the energy storage system.

The DC-DC converters in the energy storage system may be bidirectional DC-DC converters. The bidirectional DC-DC converters may be isolated or non-isolated DC-DC converters, depending on the configuration of the energy storage system.

The energy storage system may comprise several energy strings. A subset of the plurality of distributed sub-voltage adapters of at least two energy strings is connected to a common secondary energy storage block. The secondary local dc bus may be formed within an energy string or between several energy strings, depending upon how the secondary side of the plurality of distributed sub-voltage adapters is configured to be connected to the at least one secondary energy storage block. The term "common dc bus" and "local dc bus" may be used interchangeably in the disclosure.

The energy storage system may comprise the energy storage devices in the energy storage block. The energy storage devices in the energy storage block may be arranged in parallel branches of series connected energy storage devices. The energy storage devices of each branch are additionally connected in parallel with adjacent energy storage devices of the other branches. The parallel interconnection between the adjacent energy storage devices of the parallel branches of series connected energy storage devices is possible at any storage level (rack, module, or cell).

According to a second aspect, a method for charging and discharging an energy storage system is provided comprising at least one energy string. Each energy string comprises a voltage adapter comprising a plurality of distributed sub-voltage adapter units, each having a primary side and a secondary side. Each energy string further comprises a primary energy storage block having at least one energy storage device.

The primary sides of the plurality of distributed sub-voltage adapter units and the primary energy storage block are configured to be connected in series. The energy storage system further comprises at least one secondary energy storage block having at least one energy storage device. The secondary side of at least one sub-voltage adapter unit of the plurality of sub-voltage units is connected with one of said at least one secondary energy storage block. The method comprising regulating, by means of the voltage adapter, a voltage of the energy string by regulating a sub-voltage of at least one distributed sub voltage adapter unit of the plurality of distributed sub-voltage adapter units.

According to a third aspect, a computer program is provided comprising computer readable instructions which, when executed by a device having processing capability, causes the device to carry out the method of the second aspect.

### Brief description of the drawings

These and other aspects will now be described in more detail with reference to the appended drawings showing embodiments.
Figure 1 schematically shows a basic structure of an energy storage system according to the present disclosure comprising a voltage adapter with a plurality of distributed sub-voltage adapter units;
Figure 2a schematically shows an arrangement of an energy storage system according to the present disclosure comprising distributed sub-voltage adapter units, using non-isolated dc/dc converters, with a common dc bus on the secondary side;
Figure 2b schematically shows an arrangement of an energy storage system according to the present disclosure comprising distributed sub-voltage adapter units, using isolated dc/dc converters with a common dc bus on the secondary side;
Figure 2c schematically shows an arrangement of an energy storage system according to the present disclosure comprising distributed sub-voltage adapter units, using non-isolated dc/dc converters, with individual dc buses on the secondary side;
Figures 3a, 3b, and 3c schematically show the representation of energy storage blocks comprising energy storage devices at rack level, module level and cell level, respectively;
Figure 4 shows a flow chart for a method for charging and discharging of an energy storage system;
Figure 5 shows a block diagram representation of an energy storage system according to the present disclosure;
Figure 6 schematically shows different connections between energy storage devices in an energy storage block.

All the figures are schematic, not necessarily to scale, and generally only show parts which are necessary in order to elucidate the embodiments, wherein other parts may be omitted or merely suggested. Like reference numerals refer to like elements throughout the description.

### Detailed description

The present aspects will now be described more fully hereinafter with reference to the accompanying drawings, in which currently preferred embodiments are shown. These aspects may, however, be embodied in many different forms and should not be construed as limited to the embodiments set forth herein; rather, these embodiments are provided for thoroughness and completeness, and fully convey the scope of the present aspects to those skilled in art.

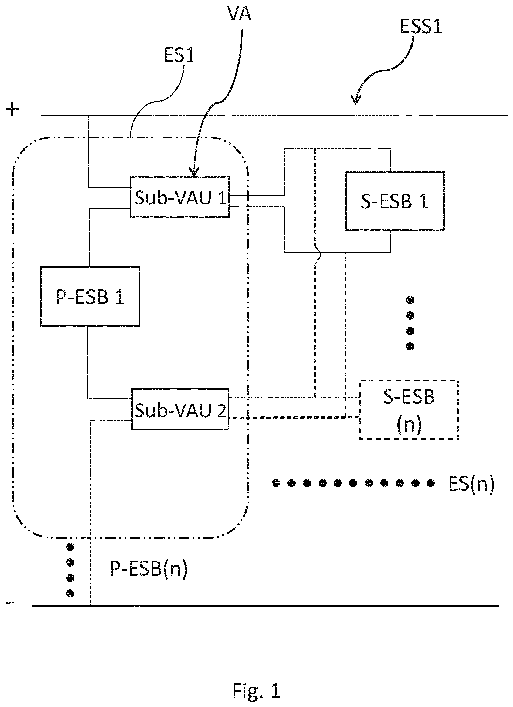

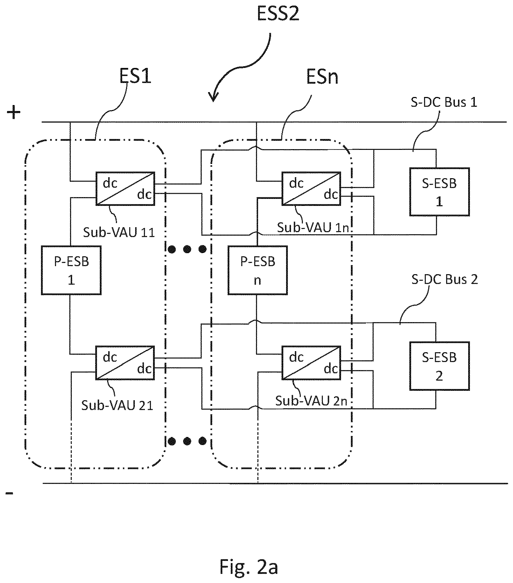

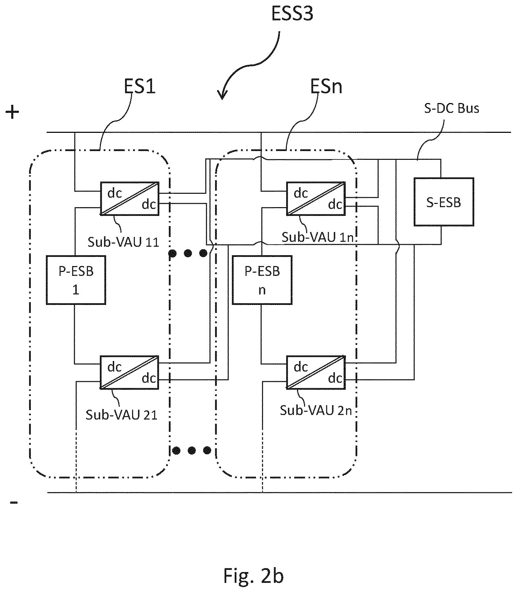

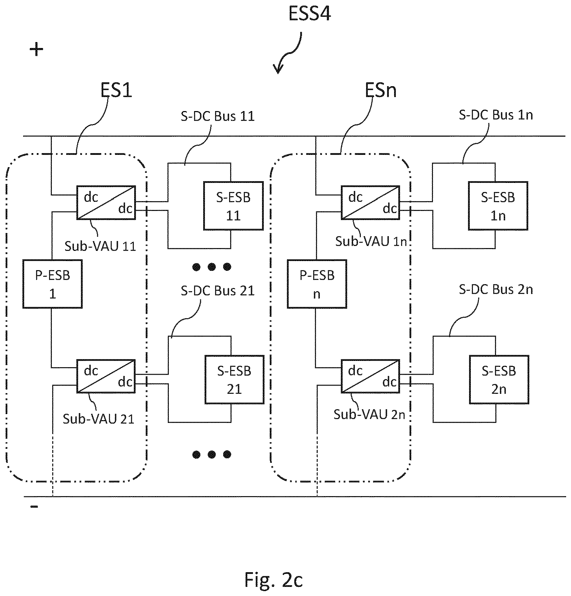

Referring to figure 1, according to an embodiment thereof a basic structure of an energy storage system ESS1 according to the present disclosure comprises a at least one energy string ES1. Each energy string ES1 comprises a voltage adapter VA comprising a plurality of distributed sub-voltage adapter units, for example, as illustrated in figure 1, comprising a first sub-voltage adapter unit Sub-VAU 1 and a second sub-voltage adapter unit Sub-VAU 2. Each plurality of distributed sub-voltage adapter units Sub-VAU 1, Sub-VAU 2 has a primary side and a secondary side. The voltage adapter VA may basically be based on a voltage source converter. The distributed sub-voltage adapter units Sub-VAU 1, Sub-VAU 2 may be non-isolated dc/dc converters or isolated dc/dc converters. The choice of type of the distributed sub-voltage adapter units may depend on the design requirements of the energy storage system ESS1 and the location of the voltage adapters in the circuitry of the energy storage system ESS1. Some variants of possible arrangements of the different parts in the energy storage system are described with reference to figures 2a, 2b and 2c.

The distributed first and second sub-voltage adapter units Sub-VAU 1, Sub-VAU 2 may be considered as separate/individual units which together perform the voltage adaptation of the energy string ES1 as a whole. Each energy string ES1, .... ESn further comprises at least one primary energy storage block P-ESB 1 having at least one energy storage device. The primary sides of the plurality of distributed sub-voltage adapter units Sub-VAU 1, Sub-VAU 2 and the at least one primary energy storage block P-ESB 1 are configured to be connected in series, preferably in a connection order of alternatingly a sub-voltage adapter unit and a primary energy storage block. The energy storage system ESS1 further comprises at least one secondary energy storage block S-ESB 1, ... S-ESB (n) each having at least one energy storage device. The secondary side of at least one sub-voltage adapter unit of the plurality of sub-voltage adapter units Sub-VAU 1, Sub-VAU 2 is configured to be connected with one of said at least one secondary energy storage block S-ESB 1, ... S-ESB (n). For example, as schematically shown in figure 1, the first sub-voltage adapter unit Sub-VAU 1 is configured to be connected with a first secondary energy storage block S-ESB 1, while the second sub-voltage adapter unit Sub-VAU 2 may be configured to be connected with the first secondary energy storage block S-ESB 1 or an n^{th} secondary energy storage block S-ESB (n). The configuration of the second sub-voltage adapter unit Sub-VAU 2, if connected to the first secondary energy storage block S-ESB 1 or the n^{th} secondary energy storage block S-ESB (n), may determine the type of the plurality of distributed sub-voltage adapter units Sub-VAU 1, Sub-VAU 2. The at least one sub-voltage adapter unit of the plurality of sub-voltage adapter units Sub-VAU 1, Sub-VAU 2 is configured and responsible to adapt the variations in the primary energy storage block P-ESB 1 of the first energy string ES1. Further, as schematically indicated in figure 1, the energy storage system ESS1 may comprise more than one energy string ES1, ... ES(n). Further, each energy string ES1, ... ES(n) may comprise more than one primary energy storage block P-ESB 1, ...P-ESB(n). In case of more than one primary energy storage block P-ESB 1, ... P-ESB(n) in the energy string ES1, ... ESn, at least one sub-voltage adapter unit of the plurality of sub-voltage units Sub-VAU 1, Sub-VAU 2, ... Sub-VAU (n) may be configured and responsible to adapt the variations in the respective primary energy storage block P-ESB 1, ... P-ESB(n) of the energy string ES1, ... ESn.

Figure 2a schematically shows an embodiment of the energy storage system ESS2 comprising non-isolated dc/dc converters as the distributed sub-voltage adapter units Sub-VAU 11, ... Sub-VAU 1n, Sub-VAU 21, ... Sub-VAU 2n with common dc buses S-DC Bus 1, S-DC Bus 2,... on the secondary side. The energy storage system ESS2 further comprises several energy strings ES1, ... ESn. Each of the several energy strings ES1, ... ESn are arranged in parallel to each other, wherein each of the several energy strings ES1, ... ESn comprises at least one primary energy storage block P-ESB 1 and non-isolated dc/dc converters as the distributed sub-voltage adapter units Sub-VAU 11, ... Sub-VAU 1n, Sub-VAU 21, ... Sub-VAU 2n. The non-isolated dc/dc converters as the distributed sub-voltage adapter units Sub-VAU 11, ... Sub-VAU 1n, Sub-VAU 21, ... Sub-VAU 2n in each energy string ES1, ... ESn together form the voltage adapter for each respective energy string. The common dc buses S-DC Bus 1, S-DC Bus 2,... on the secondary side are formed by connecting the secondary sides of the plurality of sub-voltage units Sub-VAU 11, ... Sub-VAU 1n, Sub-VAU 21, ... Sub-VAU 2n of each of the several energy strings ES1, ... ESn within a same layer of the parallel several energy strings ES1, ... ESn. For example, the first sub-voltage units Sub-VAU 11, ... Sub-VAU 1n of the plurality of sub-voltage units Sub-VAU 11, ... Sub-VAU 1n, Sub-VAU 21, ... Sub-VAU 2n in each of the several energy strings ES1, ... ESn form a first common dc bus S-DC Bus 1 on the secondary side by connecting the secondary sides of the first sub-voltage units Sub-VAU 11, ... Sub-VAU 1n, i.e., the non-isolated dc/dc converters in the first layer of each of the several energy strings ES1, ... ESn to the first secondary energy storage block S-ESB 1. Similarly, the second sub-voltage units Sub-VAU 21, ... Sub-VAU 2n of the plurality of sub-voltage units Sub-VAU 11, ... Sub-VAU 1n, Sub-VAU 21, ... Sub-VAU 2n in each of the several energy strings ES1, ... ESn form a second common dc bus S-DC Bus 2 on the secondary side by connecting the secondary sides of the second sub-voltage units Sub-VAU 21, ... Sub-VAU 2n, i.e., the non-isolated dc/dc converters in the second layer of each of the several energy strings ES1, ... ESn, to the second secondary energy storage block S-ESB 2. The arrangement of the energy storage system ESS2 shown in figure 2a can be scaled up to having more than one primary energy storage block P-ESB and several distributed sub-voltage adapter units Sub-VAU 11, ... Sub-VAU 1n, Sub-VAU 21, ... Sub-VAU 2n in each of the several energy strings ES1, ... ESn. At least the number of distributed sub-voltage adapter units Sub-VAU 11, ... Sub-VAU 1n, Sub-VAU 21, ... Sub-VAU 2n in each of the several energy strings may decide the number of the common dc buses S-DC Bus 1, S-DC Bus 2,... formed on the secondary side of the distributed sub-voltage adapter units. The number of primary energy storage blocks P-ESBs and/or the number of secondary energy storage blocks S-ESBs may additionally determine the number of the common dc buses S-DC Bus 1, S-DC Bus 2,... formed on the secondary side of the distributed sub-voltage adapter units Sub-VAU 11, ... Sub-VAU 1n, Sub-VAU 21, ... Sub-VAU 2n. The secondary dc bus S-DC Bus 1, S-DC Bus 2,... is basically formed on the configuration of the energy storage system ESS2, in particular the placement of the distributed sub-voltage adapter units Sub-VAU 11, ... Sub-VAU 1n, Sub-VAU 21, ... Sub-VAU 2n in the energy storage system ESS2.

Figure 2b schematically shows an embodiment of the energy storage system ESS3 comprising isolated dc/dc converters as the distributed sub-voltage adapter units Sub-VAU 11, ... Sub-VAU 1n, Sub-VAU 21, ... Sub-VAU 2n with a common dc bus S-DC Bus on the secondary side. The energy storage systems ESS1, ESS2 schematically described previously in conjunction with figures 1 and 2a are largely comparable to the arrangement of the energy storage system ESS3 illustrated in Figure 2b. For example, the energy storage system ESS3 arrangement shown in figure 2b may also comprise several energy strings ES1, ... ESn. Each of the several energy strings ES1, ... ESn may comprise at least one primary energy storage block P-ESB 1 and a plurality of distributed sub-voltage adapter units Sub-VAU 11, ... Sub-VAU 1n, Sub-VAU 21, ... Sub-VAU 2n. The plurality of distributed sub-voltage adapter units Sub-VAU 11, ... Sub-VAU 1n, Sub-VAU 21, ... Sub-VAU 2n may depend on the energy storage system ESS3 requirements, for example, the energy storage requirements of the energy storage system ESS3 for a particular application, i.e., the number of primary energy storage blocks P-ESBs required in each of the several energy strings ES1, ... ESn. However, the distributed sub-voltage adapter units Sub-VAU 11, ... Sub-VAU 1n, Sub-VAU 21, ... Sub-VAU 2n used are the isolated dc/dc converters in the energy storage system ESS3 configuration of figure 2b as compared to the non-isolated dc/dc converters in the energy storage system ESS3 configuration of figure 2a. The isolated dc/dc converters as the distributed sub-voltage adapter units Sub-VAU 11, ... Sub-VAU 1n, Sub-VAU 21, ... Sub-VAU 2n are indicated in figure 2b by two diagonal lines crossing the distributed sub-voltage adapter units Sub-VAU 11, ... Sub-VAU 1n, Sub-VAU 21, ... Sub-VAU 2n, in contrast to a single line in the non-isolated dc/dc converters illustrated in figure 2a. The configuration of the energy storage system ESS3 in figure 2b is also different from the above-described embodiment of the energy storage system ESS2 configuration of figure 2a in that the secondary side of the distributed sub-voltage adapter units Sub-VAU 11, ... Sub-VAU 1n, Sub-VAU 21, ... Sub-VAU 2n of the different energy strings in different layers are configured to be connected to the same secondary energy storage block S-ESB. This imposes the requirement of the isolated dc/dc converters as the distributed sub-voltage adapter units Sub-VAU 11, ... Sub-VAU 1n, Sub-VAU 21, ... Sub-VAU 2n in each of the several energy strings in the energy storage system ESS3 configuration of figure 2b. The isolated dc/dc converters as the distributed sub-voltage adapter units Sub-VAU 11, ... Sub-VAU 1n, Sub-VAU 21, ... Sub-VAU 2n of the voltage adapters support galvanic isolation between the primary and the secondary sides of the distributed sub-voltage adapter units Sub-VAU 11, ... Sub-VAU 1n, Sub-VAU 21, ... Sub-VAU 2n of the voltage adapters.

Figure 2c schematically shows an embodiment of the energy storage system ESS4 comprising non-isolated dc/dc converters as the distributed sub-voltage adapter units Sub-VAU 11, ... Sub-VAU 1n, Sub-VAU 21, ... Sub-VAU 2n with individual dc buses S-DC Bus 11, S-DC Bus 21, S-DC Bus 1n, S-DC Bus 2n... on the secondary side. The energy storage systems ESS1, ESS2, ESS3 described above with reference to figures 1, 2a and 2b, respectively, are largely comparable to the arrangement of the energy storage system ESS in Figure 2c. For example, the energy storage system ESS4 arrangement described in figure 2c may also comprise several energy strings ES1, ... ESn. Each of the several energy strings ES1, ... Esn may comprise at least one primary energy storage block P-ESB and plurality of distributed sub-voltage adapter units Sub-VAU 11, ... Sub-VAU 1n, Sub-VAU 21, ... Sub-VAU 2n. The plurality of distributed sub-voltage adapter units Sub-VAU 11, ... Sub-VAU 1n, Sub-VAU 21, ... Sub-VAU 2n may depend on the energy storage system ESS4 requirements, for example, the energy storage requirements of the energy storage system ESS4 for a particular application, i.e., the number of primary energy storage blocks P-ESBs required in each of the several energy strings ES1, ... Esn. The energy storage system ESS4 configuration of figure 2c is different from the above-described energy storage system ESS1, ESS2, ESS3 configurations in that each of the distributed sub-voltage adapter units in each of the several energy strings is configured to be connected to the respective secondary energy storage block S-ESB 11, ... S-ESB 1n, S-ESB 21, ... S-ESB 2n. The distributed sub-voltage adapter units Sub-VAU 11, ... Sub-VAU 1n, Sub-VAU 21, ... Sub-VAU 2n in each of the several energy strings are non-isolated dc/dc converters. The secondary side of each of the non-isolated dc/dc converters is configured to be connected to the respective individual secondary energy storage blocks S-ESBs to form an individual dc bus S-DC Bus 11, S-DC Bus 21, S-DC Bus 1n, S-DC Bus 2n... on the secondary side. For example, a first distributed sub-voltage adapter unit Sub-VAU 11, which is a non-isolated dc/dc converter, forms an individual dc bus S-DC Bus 11 by having its secondary side connected to a first individual secondary energy storage block S-ESB 11. Similarly, each of the other distributed sub-voltage adapter units Sub-VAU 12, ... Sub-VAU 1n, Sub-VAU 22, ... Sub-VAU 2n, which are non-isolated dc/dc converters, form individual dc buses S-DC Bus 21, S-DC Bus 1n, S-DC Bus 2n... by having their secondary side connected to a respective individual secondary energy storage block S-ESB 12, ... S-ESB 1n, S-ESB 22, ... S-ESB 2n.

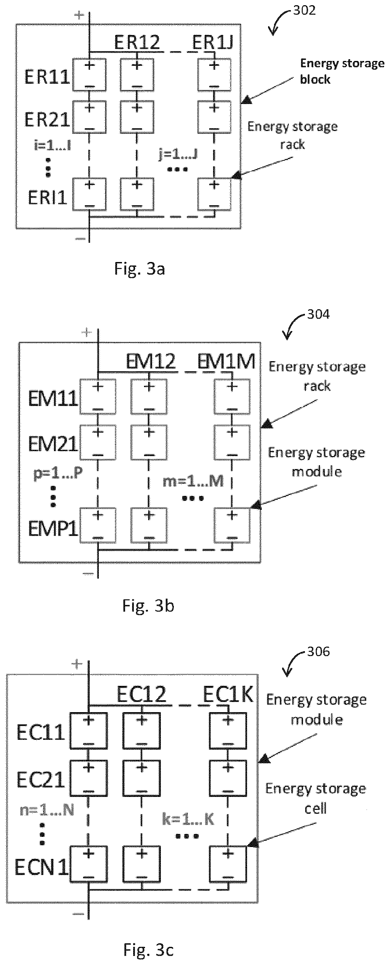

Figures 3a, 3b, and 3c schematically show the representation of energy storage blocks 302, 304, 306 comprising energy storage devices at rack level, module level and cell level, respectively. The energy storage blocks 302, 304, 306 comprising energy storage devices at rack level, module level and cell level are feasible to be used as the primary energy storage blocks P-ESBs and the secondary energy storage blocks S-ESBs in any of the embodiments of the energy storage system ESS. For example, figure 3a schematically shows the energy storage block in the energy storage system ESS comprising series- or/and parallel-connected racks (ER11, ER21,... ERI1, ER12,... , ERLJ.

The at least one energy string in the energy storage system ESS may comprise one or more series- or/and parallel-connected racks. The number of series-connected and parallel-connected racks can be arbitrary and may depend on the energy storage system design. The rack level may also be called string level. Each rack may comprise either a single or a plurality of series- or/and parallel-connected modules, as shown in figure 3b. The modules themselves may comprise either a single or a plurality of energy storage cells connected in series or/and parallel, as shown in figure 3c. The number of energy storage cells in the modules may depend on the required energy capacity and terminal voltage of the module. The cell may be, for example, a capacitor, a battery, or a supercapacitor. Figure 3b schematically shows the energy storage rack in the energy storage system ESS comprising series- or/and parallel-connected modules (EMs). However, as stated above the energy storage blocks 302, 304, 306 in the energy storage system ESS may comprise energy storage devices at either the rack level, module level or cell level. Therefore, it is possible to have the energy storage system ESS in any of the previously described configurations to have the energy storage blocks 302, 304, 306 as the energy storage modules or the energy storage cells by itself.

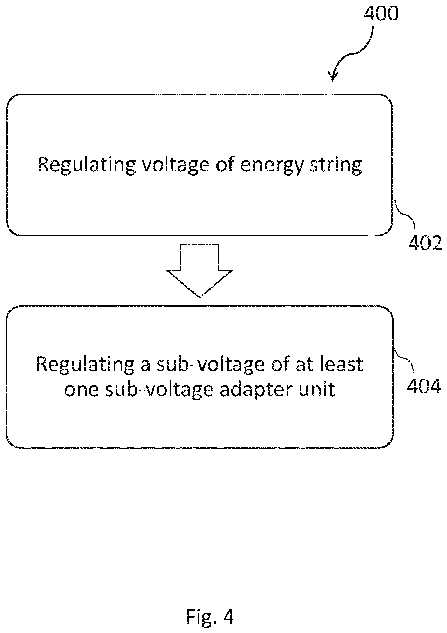

Figure 4 schematically show a flow chart for a method 400 for charging and discharging of an energy storage system, energy storage system ESS. The method 400 is provided for charging and discharging an energy storage system ESS comprising at least one energy string. Each energy string comprises a voltage adapter comprising a plurality of distributed sub-voltage adapter units, each having a primary side and a secondary side. Each energy string further comprises a primary energy storage block having at least one energy storage device. The primary sides of the plurality of distributed sub-voltage adapter units and the primary energy storage block are configured to be connected in series. The energy storage system further comprises at least one secondary energy storage block having at least one energy storage device. The secondary side of at least one of the sub-voltage adapter unit of the plurality of sub-voltage units is connected with one of said at least one secondary energy storage block.

The method 400 for charging and discharging an energy storage system, energy storage system ESS, comprises regulating 402, by means of the voltage adapter, a voltage of the at least one energy string. Regulating the voltage of the at least one energy string is performed by regulating 404 a sub-voltage of the at least one energy string. Regulating the sub-voltage of the at least one energy string is performed by regulating the voltage of the at least one distributed sub voltage adapter unit of the plurality of distributed sub-voltage adapter units in the at least one energy string. The energy storage system ESS described above in different embodiments are capable of performing the method of charging and discharging an energy storage system so as to regulate the energy storage system ESS. Regulating the sub-voltage of the at least one energy string allows each of the distributed sub-voltage adapter units of the plurality of distributed sub-voltage adapter units in each energy string to handle only a fraction of the total energy string voltage. Depending on the number of the plurality of distributed sub-voltage adapter units in the at least one energy string the voltage stress is distributed among the plurality of distributed sub-voltage adapter units in the at least one energy string. The plurality of distributed sub-voltage adapter units in the at least one energy string may be configured to be connected at different voltage levels of the at least one energy string, i.e., at different voltage levels of one energy string or at different voltage levels of plurality of parallel energy strings. The plurality of distributed sub-voltage adapter units in the energy string or plurality of parallel energy strings may be configured to be connected to a common secondary energy storage device or an independent secondary energy storage device at the secondary side of the plurality of distributed sub-voltage adapter units.

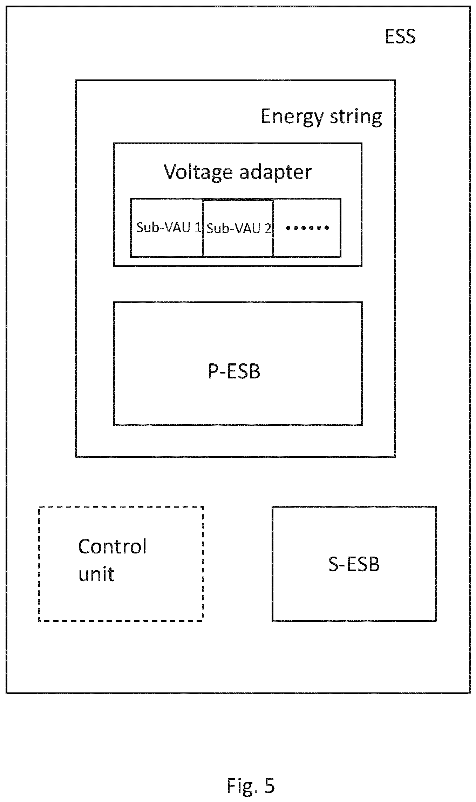

Figure 5 schematically show a block diagram representation of an energy storage system. The energy storage system ESS comprises a at least one energy string. Each energy string comprises a voltage adapter comprising a plurality of distributed sub-voltage adapter units (Sub-VAU 1, Sub-VAU 2,... ), similar to for example as shown in figures 1 and 2. Each plurality of distributed sub-voltage adapter units (Sub-VAU 1, Sub-VAU 2,... ) has a primary side and a secondary side. The voltage adapter may basically be based on a voltage source converter. The voltage adapter comprising a plurality of distributed sub-voltage adapter units may be non-isolated dc/dc converters or isolated dc/dc converters. The choice of type of the plurality of distributed sub-voltage adapter units may depend on the design requirements of the energy storage system ESS and the location of the voltage adapters in the energy storage system ESS circuitry. The different variants of possible arrangements of the distributed sub-voltage adapter units in the energy storage system ESS are described above with reference to figures 2a, 2b and 2c. The distributed sub-voltage adapter units may be considered as separate/individual units which together perform the voltage adaptation of the energy string as a whole. Each energy string further comprises at least one primary energy storage block P-ESB having at least one energy storage device. The primary sides of the plurality of distributed sub-voltage adapter units Sub-VAU 1, Sub-VAU 2,... and the at least one primary energy storage block P-ESB are configured to be connected in series. The energy storage system ESS further comprises at least one secondary energy storage block S-ESB having at least one energy storage device. The secondary side of at least one sub-voltage adapter unit of the plurality of sub-voltage adapter units Sub-VAU 1, Sub-VAU 2,... is configured to be connected with one of said at least one secondary energy storage block S-ESB. The at least one sub-voltage adapter unit of the plurality of sub-voltage adapter units Sub-VAU 1, Sub-VAU 2, ... is configured and responsible to adapt the variations in one of the at least one primary energy storage block P-ESB of the energy string.

The energy storage system ESS may further comprise a control unit. The control unit may be connected to the voltage adapter to control the regulation of the individual voltage levels of the sub-voltage adapter units of the at least one energy string. The control unit may be centralized for the complete energy storage system or distributed for each string in the energy storage system, or may be distributed individually for each of the sub-voltage adapter units of the voltage adapter in the energy storage system. In either way, the control actions of the control unit are coordinated between different sub-voltage adapter units of the voltage adapter. It is also not necessary to have the energy storage system ESS itself comprise the control unit. The control unit stated above may also be situated remotely, centralized or distributed.

In case of several energy strings, the regulation of the individual voltage levels of the sub-voltage adapter units of the at least one energy string, prevents unnecessary circulating currents among parallel energy strings and maximizes the availability of energy capacity of series connected energy storage blocks.

At least one of the primary and the secondary energy storage blocks may comprise several energy storage devices, wherein the several storage devices are of the same type. The primary energy storage block(s) in the at least one energy string may comprise similar energy storage devices. Similarly, the secondary energy storage block(s) in the energy storage system may comprise similar energy storage devices. However, the energy storage devices in the primary energy storage block(s) may be different than the energy storage devices in the secondary energy storage block(s). The similarity and difference between the energy storage devices may be defined by the type of the energy storage devices and/or alternatively the energy capacity of the energy storage devices and/or life span, health, charging rate, and/or discharging rate of the energy storage devices.

Energy storage at the secondary side, i.e. the secondary energy storage blocks S-ESBs, may be required to fulfill the instantaneous mismatch between regulated energy strings ES1, ... ESn of the energy storage system ESS. For example, to boost voltage/energy on the primary side, i.e. the primary energy storage blocks P-ESBs, when there is a need to supply some of the stored energy from the secondary side i.e. by the secondary energy storage blocks S-ESBs, to the primary side, i.e. the primary energy storage blocks P-ESBs. In an alternate event, the energy from the primary side, i.e. the primary energy storage blocks P-ESBs, may sometimes need to be drawn and stored on the secondary side i.e. by the secondary energy storage blocks S-ESBs, for the next cycle.

The secondary energy storage blocks S-ESBs need not to be the size of the primary energy storage blocks P-ESBs. For example, it may be a capacitor with a small value (i.e. small capacity to hold the charge), just to balance energy between plurality of distributed sub-voltage adapter units switching instances. However, it may require that the secondary sides of voltage adapters from other strings need to be interconnected, so the surplus energy from other energy strings in the energy storage system ESS can flow to the energy string which lacks energy.

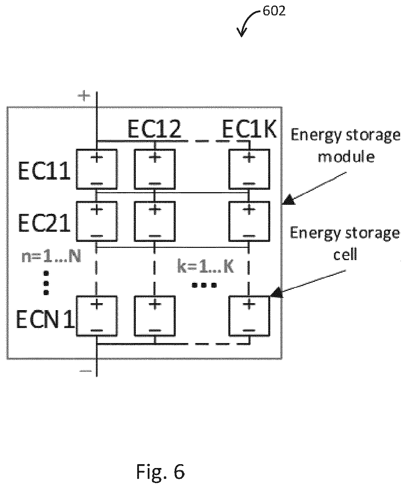

Figure 6 schematically shows the representation of an energy storage block 602 comprising energy storage devices at cell level. The energy storage system ESS may comprise the energy storage devices in the energy storage block 602 as described above in conjunction with figure 3c. The energy storage devices in the energy storage block 602 may be arranged in parallel branches of series connected energy storage devices EC11, EC21, ECN1, EC12, ... EC1K....The energy storage devices of each branch are additionally connected in parallel with adjacent energy storage devices of the other branches. The parallel interconnection between the adjacent energy storage devices of the parallel branches of series connected energy storage devices is possible at any storage level i.e., rack, module, or cell level as described above in conjunction with figures 3a, 3b, and 3c.

## Claims

1. An energy storage system (ESS1, ESS2, ESS3, ESS4) comprising:
at least one energy string (ES1, ... ESn), wherein each energy string comprises
a voltage adapter (VA) comprising a plurality of distributed sub-voltage adapter units (Sub-VAU 1, Sub-VAU 2, Sub-VAU 11, ... Sub-VAU 1n, Sub-VAU 21, ... Sub-VAU 2n) each having a primary side and a secondary side; and
a primary energy storage block (P-ESB 1, ... P-ESB n) having at least one energy storage device;
wherein the primary sides of the plurality of distributed sub-voltage adapter units and the primary energy storage block are connected in series;
wherein the energy storage system further comprises at least one secondary energy storage block (S-ESB 1, ... S-ESB n, S-ESB 1n, S-ESB 2n, ...) having at least one energy storage device; and
wherein the secondary side of at least one sub-voltage adapter unit of the plurality of distributed sub-voltage adapter units is connected with one of said at least one secondary energy storage block.

2. The energy storage system according to claim 1, wherein the primary and secondary energy storage blocks comprise different types of energy storage devices or/and different energy capacities.

3. The energy storage system according to any one of claims 1 and 2, wherein both the primary and the secondary energy storage blocks comprise several energy storage devices, wherein the primary and secondary energy storage blocks comprise different series and/or parallel arrangements of the energy storage devices.

4. The energy storage system according to any one of claims 1-3, wherein the energy storage block comprises energy storage devices on at least one of a rack level (302), a module level (304) and a cell level (306).

5. The energy storage system according to any one of claims 1-4, wherein the energy storage devices are selected from the types batteries, capacitors and super-capacitors.

6. The energy storage system according to any one of claims 1-5, wherein the secondary sides of the sub-voltage adapter units are connected with the same secondary energy storage block or different secondary energy storage blocks of said at least one secondary energy storage block.

7. The energy storage system according to any one of the preceding claims, further comprising a control unit connected to the voltage adapter to regulate individual voltage levels of the sub-voltage adapter units of the at least one energy string.

8. The energy storage system according to any one of the preceding claims comprising several energy strings, wherein the plurality of distributed sub-voltage adapter units of the voltage adapters of at least two energy strings of the several energy strings are connected to the same secondary energy storage block.

9. The energy storage system according to any one of the preceding claims, wherein each of the plurality of distributed sub-voltage adapter units of the voltage adapter is a DC-DC converter.

10. The energy storage system according to claim 9, wherein the DC-DC converters are bidirectional DC-DC converters.

11. The energy storage system according to any one of the preceding claims comprising several energy strings, wherein a subset of the plurality of distributed sub-voltage adapters of at least two energy strings is connected to a common secondary energy storage block.

12. The energy storage system according to any of the preceding claims, wherein the energy storage devices in the energy storage block are arranged in parallel branches of series connected energy storage devices, wherein the energy storage devices of each branch are additionally connected in parallel with adjacent energy storage devices of the other branches.

13. A method (400) for charging and discharging an energy storage system comprising:
at least one energy string, wherein each energy string comprises a voltage adapter comprising a plurality of distributed sub-voltage adapter units each having a primary side and a secondary side, and a primary energy storage block having at least one energy storage device,
wherein the primary sides of the plurality of distributed sub-voltage adapter units and the primary energy storage block are connected in series,
the energy storage system further comprising at least one secondary energy storage block having at least one energy storage device; and
wherein the secondary side of at least one sub-voltage adapter unit of the plurality of sub-voltage units is connected with one of said at least one secondary energy storage block
the method comprising:
regulating (402), by means of the voltage adapter, a voltage of the energy string by regulating (404) a sub-voltage of at least one distributed sub voltage adapter unit of the plurality of distributed sub-voltage adapter units.

14. A computer program comprising computer readable instructions which, when executed by a device having processing capability, causes the device to carry out the method of claim 13.
